# FASCICULE DE BREVET EUROPEEN

(11) **EP 1 590 632 B1**
(45) Date de publication et mention de la délivrance du brevet: **10.04.2019**
(21) Numéro de dépôt: 04706714.5
(22) Date de dépôt: 30.01.2004
(51) Int. Cl.: G01D 4/00, G01F 15/06, G01D 5/347, G01F 1/06

(54) **DISPOSITIF DE DETECTION OPTIQUE POUR COMPTEUR**
OPTISCHE DETEKTIONSEINRICHTUNG FÜR EINEN ZÄHLER
OPTICAL DETECTION DEVICE FOR A COUNTER

(30) Priorité: 05.02.2003 FR 0301318
(43) Date de publication de la demande: 02.11.2005
(73) Titulaire: Itron Global SARL, Liberty Lake WA 99019 (US)
(72) Inventeur: BULTEAU, Serge, F-69840 Julienas (FR); CROS, Alain, F-71680 Creches sur Saone (FR); DEMIA, Laurent, F-01120 Montluel (FR)
(74) Mandataire: Howson, Richard Giles Bentham
(86) Numéro de dépôt international: PCT/FR2004/000233
(87) Numéro de publication internationale: WO 2004/079302

(56) Documents cités:
- FR-A- 2 740 216
- GB-A- 2 230 629
- US-A- 3 983 391
- US-A- 4 327 362
- US-A- 5 266 797

## Description

La présente invention concerne un dispositif de détection optique pour compteur, en particulier pour compteur de fluide, par exemple d'eau, destiné à permettre le relevé à distance de la consommation de ce compteur d'eau ou des opérations équivalentes de type journalisation ou alarme.

Elle concerne plus précisément un dispositif de détection optique pour compteur comportant un indicateur de consommation formé d'une cible rotative et des éléments optiques du type émetteur et du type récepteur, dont au moins un est en vis à vis de la dite cible et dont le signal optique reçu est traité pour déduire au moins le nombre de tours dudit disque, comprenant au moins deux dits éléments optiques d'un type et au moins un dit élément optique de l'autre type.

Un tel dispositif est connu du document de brevet EP 0 380 794.

Selon ce document, le dispositif comprend un détecteur optique qui est disposé à l'extérieur du compteur et qui est adapté pour produire un signal utile à chaque fois qu'un index ou secteur actif agencé sur un disque passe devant le détecteur. Ce signal est amplifié et converti en signal carré de façon à être envoyé sur un réseau de transmission de données. Un tel dispositif de détection permet la détermination du nombre de tours du disque mais ne permet pas de déterminer le sens de rotation de ce disque.

Or un compteur de fluide, en particulier un compteur d'eau, peut fonctionner en entrée de fluide et également en sortie de fluide. C'est le cas par exemple lors de vidage de canalisations d'arrivée d'eau lors de travaux ou lors d'à-coups de flux entraînant un aller et retour de l'eau.

Le dispositif d'affichage de la consommation, par exemple un agencement à rouleaux chiffrés, tient compte de cette donnée.

Les documents de brevet GB 2 230 629, US 3 983 391 et FR 2 740 216 concernent des dispositifs de détection optique pour compteur comportant un indicateur de consommation formé d'une cible rotative et des éléments optiques du type émetteur et du type récepteur.

Le but de l'invention est de fournir un dispositif de détection optique capable de déterminer le sens de circulation de l'eau et donc le sens de rotation du disque indicateur afin de prendre en compte une consommation que l'on peut qualifier de négative et de fournir une donnée de consommation identique à celle fournie par le dispositif d'affichage classique du compteur.

Pour ce faire, l'invention propose un dispositif de détection optique pour compteur comportant un indicateur de consommation formé d'une cible rotative et des éléments optiques du type émetteur et du type récepteur, dont au moins un est en vis à vis de la dite cible et dont le signal optique reçu est traité pour déduire au moins le nombre de tours dudit disque, comprenant au moins deux dits éléments optiques d'un type et au moins un dit élément optique de l'autre type, le dispositif comportant également au moins un miroir réfléchissant chaque faisceau optique sur la trajectoire de la cible et étant caractérisé en ce que ladite cible est une portion de disque opaque d'angle au centre dit premier angle de 180° et lesdits deux éléments optiques d'un type sont des éléments émetteurs d'un faisceau de lumière dont le faisceau de lumière est extérieur à la cible.

Ces éléments optiques peuvent être intégrés dans un même composant et un capot adéquat du compteur et du module peut limiter les faisceaux de lumière parasites.

Le choix d'un disque opaque d'angle au centre de 180° assure une optimisation de la fréquence des éléments émetteurs relativement à la consommation d'énergie électrique. Or de tels compteurs ou modules fonctionnent sur pile et il est avantageux qu'ils soient à basse consommation. Une séquence unique du faisceau de lumière peut être choisie qui est optimale quels que soient les états. Cette séquence unique assure des états équilibrés en terme d'angle et de durée à vitesse constante.

De préférence, le dispositif de détection optique comporte deux éléments optiques émetteurs et un élément optique récepteur.

Ce mode de réalisation a pour avantage d'être le moins onéreux, les émetteurs optiques étant en général moins cher que les récepteurs optiques.

Selon une autre variante, le dispositif comporte deux éléments optiques émetteurs et deux éléments optiques récepteurs associés par couple, chaque élément récepteur recevant le faisceau optique de l'élément émetteur du même couple.

Avantageusement, les deux émetteurs optiques fonctionnent séquentiellement.

Avantageusement, les trois éléments optiques sont sensiblement alignés et l'élément optique récepteur est entre les éléments émetteurs.

Le positionnement des éléments peut être tel que l'angle d'incidence du faisceau optique émis et reçu par les éléments optiques est inférieur à 60°.

Le dispositif peut comprendre au moins un dispositif de collimation du faisceau optique et ce dispositif de collimation peut comporter des fentes de limitation des interférences parasites entre faisceaux de lumière.

Cet agencement permet d'obtenir des transitions d'état plus franches et un couplage entre émetteurs et récepteurs optiques meilleur.

Selon une variante de réalisation, le dispositif comporte un émetteur optique supplémentaire dont la trace sur le disque est centrée sur l'axe de symétrie du disque, le disque étant pourvu d'une zone réfléchissante autour de cet axe.

L'invention concerne également un compteur de fluide comportant un disque rotatif partie d'un dispositif de détection optique tel que précisé ci-dessus.

L'invention concerne enfin un module de détection destiné à coopérer avec un compteur de fluide et comportant lesdits éléments optiques parties d'un dispositif tel que précisé ci-dessus.

Avantageusement, ce module comporte également un dispositif de collimation du faisceau optique.

L'invention est décrite ci-après plus en détail à l'aide de figures ne représentant qu'un mode de réalisation préféré de l'invention.
La figure 1 est une vue d'un compteur et d'un module conformes à l'invention.
La figure 2 est une vue en coupe d'un dispositif de détection conforme à l'invention, selon un premier mode de réalisation.
La figure 3 est une vue de dessus d'une cible rotative partie d'un dispositif de détection conforme à l'invention, selon différentes positions.
La figure 4 est un diagramme illustrant le traitement des données détectées par un dispositif de détection conforme à l'invention.
La figure 5 est une vue en coupe partielle d'une variante de réalisation d'un dispositif de détection conforme à l'invention.
La figure 6 est une vue en coupe partielle d'une autre variante de réalisation d'un dispositif de détection conforme à l'invention.
La figure 7 est une vue en coupe d'un dispositif de détection conforme à l'invention, selon un troisième mode de réalisation.

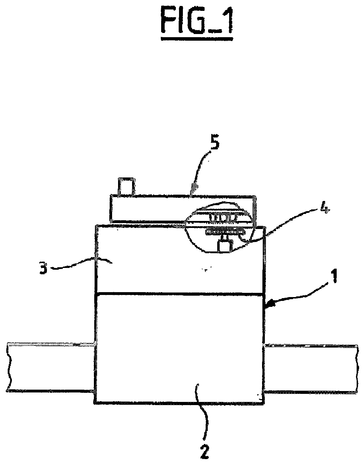

La figure 1 est une vue de face d'un compteur 1 de fluide, plus précisément d'eau, comportant un carter dit bâche 2 pourvue d'une canalisation d'arrivée et une canalisation de sortie de l'eau et surmontée d'un totaliseur 3 contenant un mécanisme de transmission et de réduction de la rotation de l'arbre d'un élément mesurant tel qu'une turbine ou une chambre volumétrique, contenu dans la bâche 2 vers un dispositif d'affichage de la consommation non représenté et une cible indicatrice 4 rotative parallèle à une paroi supérieure transparente du totaliseur.

Un module de détection optique 5 à paroi inférieure au moins partiellement transparente est posé sur la paroi supérieure du compteur 1 afin de détecter la consommation d'eau ainsi que son sens de circulation.

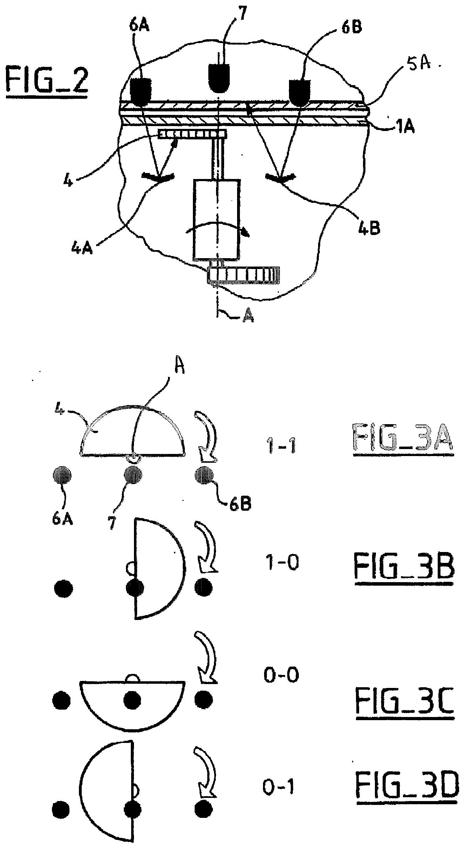

La figure 2 illustre plus en détail le dispositif de détection optique conforme à l'invention.

Le compteur 1 comporte donc une paroi transparente 1A et parallèle à cette paroi une cible indicatrice 4 entraînée par un mécanisme de transmission. Cette cible est une portion de disque opaque d'angle au centre égal à 180°.

Disposés de façon à venir face à cette cible 4 ou à proximité de celle-ci lorsque le module est mis en place sur le compteur 1, le module 5 comporte trois éléments optiques, plus précisément deux émetteurs optiques 6A, 6B disposés chacun de chaque côté d'un récepteur optique 7. Si l'on considère l'axe A de la portion de disque 4, le récepteur optique 7 est décalé de cet axe A et les trois éléments optiques 6A, 6B et 7 sont alignés parallèlement à un rayon de la portion de disque 4.

Les deux émetteurs 6A, 6B émettent un faisceau de lumière extérieur à la cible 4 et le dispositif de détection comporte également deux miroirs 4A, 4B réfléchissant chaque faisceau optique sur la trajectoire de la cible 4.

Au lieu de deux miroirs séparés 4A, 4B comme réprésentés, il peut être utilisé un seul miroir assurant la réflexion des deux faisceaux optiques émis par les émetteurs 6A et 6B.

De préférence, les émetteurs optiques 6A, 6B sont des diodes LED émettrices d'un faisceau infra rouge qui traverse les deux parois transparentes 5A, 1A et se réfléchit sur un miroir 4A, 4B.

Si ce faisceau réfléchi n'est pas coupé par la cible 4 (comme sur la droite de la figure 2), il est reçu par le récepteur optique 7, constitué de préférence d'une photodiode ou d'un phototransistor. S'il est coupé par la cible 4 (comme sur la gauche de la figure 2), il n'est pas reçu par le récepteur 7.

Sur la figure 3, sont représentées différentes positions relatives de la cible 4 et des émetteurs et récepteur 6A, 6B, 7, vus selon un plan perpendiculaire à l'axe A du disque.

Le sens de rotation du disque y est représenté par une flèche, ce sens correspondant à une consommation normale positive de fluide.

Dans la position 3A, les deux faisceaux des émetteurs 6A, 6B et leurs faisceaux réfléchis se situent hors de la cible 4. Les signaux optiques reçus séquentiellement par le récepteur 7 sont maximaux et proviennent des deux faisceaux émis. Est donc détecté un couple de valeurs égal à (1, 1).

Dans la position 3B, le faisceau de l'émetteur 6A et son faisceau réfléchi par le miroir 4A se situent hors de la cible 4. Le faisceau de l'émetteur 6B a son faisceau réfléchi par le miroir 4B qui par contre est coupé par la cible 4. N'est donc reçu par le récepteur 7 que le premier faisceau réfléchi et est détecté un couple de valeurs égales à (1, 0).

Dans la position 3C, les deux faisceaux des émetteurs 6A, 6B ont leurs faisceaux réfléchis coupés par la cible 4. Le signal optique reçu par le récepteur 7 est sensiblement nul. Est donc détecté un couple de valeurs égal à (0, 0).

Dans la position 3D, le faisceau de l'émetteur 6A a son faisceau réfléchi par le miroir 4A coupé par la cible 4. Le faisceau de l'émetteur 6B et son faisceau réfléchi par le miroir 4B sont par contre hors de la cible 4. N'est donc reçu par le récepteur 7 que le second faisceau réfléchi et est détecté un couple de valeurs égales à (0, 1).

En consommation positive, la série des signaux reçus est donc (1, 1), (1, 0), (0, 0), (0, 1) et la fréquence de leurs changements d'état permet de déterminer la vitesse de rotation de la cible indicatrice 4 et donc la consommation. Une série comportant un des couples précédents dans un autre ordre permet de détecter une modification du sens de rotation de la cible indicatrice 4 et donc une consommation négative.

Au lieu d'opérer comme ci-dessus, l'on peut rechercher une transmission petite dite minimale au travers du disque 4 au lieu de rechercher une opacité totale et une transmission nulle.

Ainsi, l'invention permet également de détecter le positionnement du module sur le compteur. En effet, le signal peut avoir trois valeurs :
- nulle, indiquant que le module n'est pas positionné,
- minimale, indiquant une transmission au travers du disque 4,
- maximale, indiquant une transmission hors du disque 4.

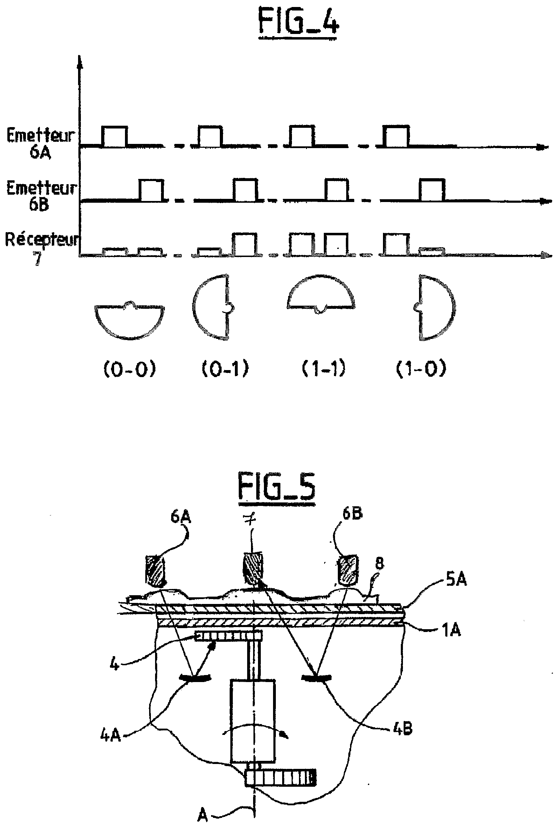

Ces signaux schématisés en signaux carrés sont représentés sur la figure 4. Le traitement de ces signaux n'exige aucune électronique complexe et peut être traité directement par un microcontrôleur.

Dans ce qui précède, dans un but de simplification de la description, il a souvent été question d'une impulsion de lumière émise par les diodes 6A, 6B lors d'un quart de tour du disque 4. Selon l'invention, les émetteurs optiques 6A, 6B fonctionnent séquentiellement ce qui permet de déterminer les signaux et les états correspondants et a pour avantage de nécessiter une consommation globale réduite. Le faisceau de lumière est émis sous forme d'impulsions de fréquence liée à la vitesse de rotation maximale de la cible.

Précédemment, les éléments optiques 6A, 6B, 7 sont avantageusement des composants optiques CMS (Composants Montés en Surface) et simples, c'est-à-dire sans collimation intégrée aux composants.

Comme visible sur la figure 5, des dispositifs de collimation 8 des faisceaux optiques de type lentille peuvent être intercalés entre la paroi transparente 5A du module 5 et les éléments optiques 6A, 6B, 7, ou être formés directement par la paroi transparente 5A du module 5 qui est conformée en dispositif de collimation.

Les éléments optiques 6A, 6B, 7 peuvent être également dans ce cas des composants optiques CMS (Composants Montés en Surface).

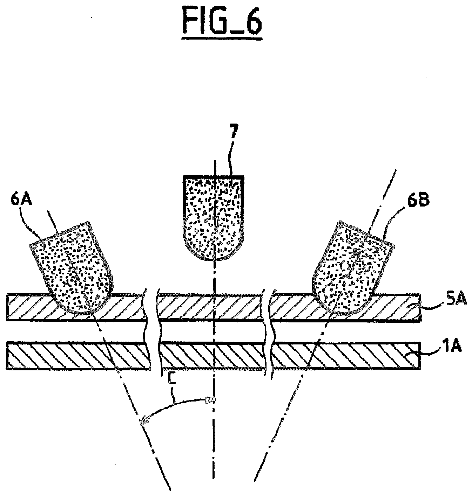

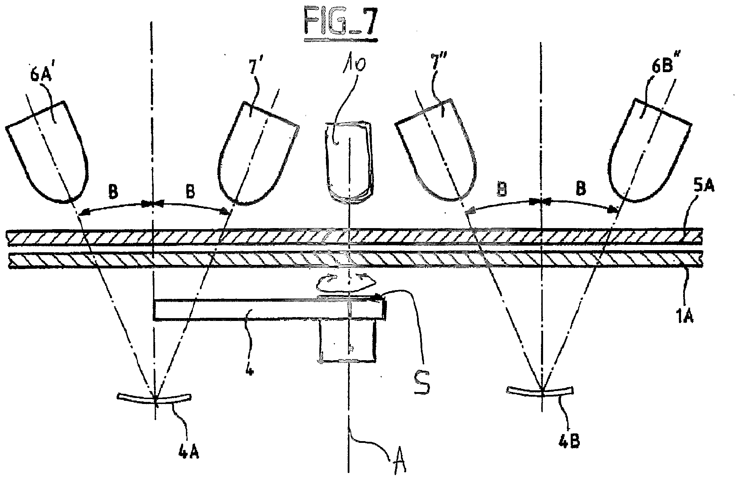

Les figures 6 et 7 illustrent des variantes de réalisation conformes à l'invention.

Bien qu'un dispositif d'étanchéité puisse être prévu entre le module de relevé et le totalisateur, de type joint ou emmanchement par exemple, peuvent se déposer sur la paroi transparente 1A du compteur 1 des particules ou salissures solides ou liquides qui interfèrent dans la transmission du faisceau de lumière au travers des parois transparentes 1A, 5A du compteur 1 et du module de détection 5.

Comme visible sur la figure 7, afin que cette interférence soit minimisée, les éléments optiques 6A', 6B", 7', 7" sont conformés, afin que l'angle d'incidence B de ce faisceau soit très faible et de préférence inférieur à 60°. Ainsi les pertes de puissance du faisceau dues aux particules ou salissures sont minimes et le faisceau transmis aux travers des parois transparentes reste de forte puissance.

Une solution pour minimiser cet angle d'incidence B est de choisir une distance entre les éléments optiques et le disque adéquate, l'angle B étant d'autant plus petit que cette distance est grande.

La figure 6 illustre une autre possibilité.

Ici le récepteur optique 7 est disposé avec son axe de symétrie dirigé dans le sens du faisceau de lumière perpendiculaire la paroi transparente 1A du module et les deux émetteurs optiques 6A, 6B ont leur propre axe de symétrie équivalent dans un plan perpendiculaire à cette paroi 1A mais incliné d'un angle C par rapport à cet axe de symétrie du récepteur optique central 7. De préférence, cet angle C est inférieur à 60°. Par ailleurs, le récepteur 7 est situé au-dessus des diodes émettrices 6A et 6B de façon à éviter le couplage direct entre émetteur et récepteur sans passer par la cible tournante.

Dans ce qui a été décrit précédemment, le dispositif de détection optique comporte deux éléments optiques émetteurs et un élément optique récepteur, qui reçoit les deux faisceaux optiques émis. Ces agencements sont particulièrement économiques, vu le coût d'une photodiode ou d'un phototransistor.

Cependant, toujours dans le cadre de l'invention, il peut être utilisé deux éléments optiques émetteurs et deux éléments optiques récepteurs, associés par couple, chaque élément récepteur recevant le faisceau optique de l'élément émetteur du même couple.

Un tel dispositif de détection selon l'invention est décrit sur la figure 7.

Deux couples comportant chacun un émetteur optique 6A', 6B" et un récepteur optique 7', 7" sont disposés dans le module. Chaque émetteur 6A', 6B" émet un faisceau optique au travers des parois en vis-à-vis du module 5A et du compteur 1A et les effets sont du même type que ceux précédemment décrites, sur la figure 3.

Comme déjà vu, afin de minimiser l'interférence des particules ou salissures solides ou liquides dans la transmission du faisceau de lumière au travers des parois transparentes 1A, 5A du compteur 1 et du module de détection 5, l'angle d'incidence B des faisceaux est faible et de préférence inférieur à 60°. Pour ce faire, les éléments optiques 6A', 7', 6B", 7" sont inclinés de cet angle B par rapport au plan de symétrie de chaque couple, perpendiculaire aux parois du module 5A ou du compteur 1A.

Sur le même principe optique, il est possible de réaliser un dispositif de détection de présence du module sur le compteur. Un émetteur optique commun au dispositif de détection déjà décrit ou dédié à la détection de présence 10 est alors disposé pour que son faisceau émis se réfléchisse sur une surface réfléchissante S, agencée sur le disque 4 autour de l'axe de rotation A. L'absence de faisceau réfléchi indique que le module n'est pas positionné sur le compteur. Une modification de ce faisceau réfléchi indique que le module n'est pas correctement positionné sur le compteur.

Avantageusement, un émetteur optique supplémentaire dédié 10 est utilisé pour ce faire, cet émetteur étant par exemple centré sur le disque 4. Plus généralement, la trace du faisceau émis par cet émetteur sur le disque 4 est centrée sur l'axe A représenté sur la figure 3.

## Revendications

1. Module de détection (5) destine à coopérer avec un compteur de fluide comportant un indicateur de consommation formé d'une cible rotative et au moins un miroir, le module comportant des éléments optiques du type émetteur et du type récepteur, le module (5) comprenant au moins deux dits éléments optiques (6A, 6B) d'un type et au moins un dit élément optique (7) de l'autre type, **caractérisé en ce que** les trois éléments optiques (6A, 6B, 7) sont alignés parallèlement à un rayon d'une cible rotative dudit compteur de fluide, et au moins un desdits éléments optiques (7) du type récepteur est en vis-à-vis de ladite cible rotative dudit compteur de fluide,
lesdits deux éléments optiques (6A, 6B) sont des éléments émetteurs d'un faisceau de lumière dont le faisceau de lumière est extérieur à la cible, l'élément optique (7) est disposé de façon à recevoir un signal optique réfléchi par ledit au moins un miroir réfléchissant chaque faisceau optique sur la trajectoire de la cible, le signal reçu étant traité pour déduire au moins le nombre de tours de ladite cible.

2. Module de détection selon la revendication précédente, **caractérisé en ce qu'**il comporte deux éléments optiques émetteurs (6A, 6B) et un élément optique récepteur (7).

3. Module de détection selon la revendication 2, **caractérisé en ce que** lesdits trois elements optiques (6A, 6B, 7) sont sensiblement alignés et l'élément optique récepteur (7) est entre les elements émetteurs (6A, 6B).

4. Module de détection selon l'une des revendications précédentes, **caractérisé en ce qu'**il comporte deux elements optiques émetteurs (6A', 6B") et deux elements optiques récepteurs (7', 7"), associes par couple, chaque élément récepteur recevant le faisceau optique de l'élément émetteur du même couple.

5. Module de détection selon l'une des revendications précédentes, **caractérisé en ce que** les deux émetteurs optiques (6A, 6B) fonctionnent séquentiellement.

6. Module de détection selon l'une des revendications précédentes, **caractérisé en ce que** le positionnement desdits elements optiques (6A, 6B, 7) est tel que l'angle d'incidence (B) du faisceau optique émis et reçu par les elements optiques est inférieur à 60°.

7. Module de détection selon l'une des revendications précédentes, **caractérisé en ce qu'**il comprend au moins un dispositif de collimation (8) des faisceaux optiques.

8. Module de détection selon la revendication 7, **caractérisé en ce que** ledit dispositif de collimation (8) comporte des fentes (9) de limitation des interférences parasites entre faisceaux de lumière.

9. Module de détection selon l'une des revendications précédentes, **caractérisé en ce qu'**il comporte un émetteur optique supplémentaire dont, lorsque le module (5) et en coopération avec dit compteur de fluide (1), la trace sur le disque (4) est centrée sur l'axe de symétrie (A) du disque, le disque (4) étant pourvu d'une zone réfléchissante autour de cet axe (A).

10. Compteur de fluide (1) destine à coopérer avec un module de détection optique (5) selon la revendication 1, comportant un indicateur de consommation formé d'une cible rotative (4) et au moins un miroir (4A, 4B) réfléchissant des faisceaux optiques reçus du module de détection sur la trajectoire de la cible et étant **caractérisé en ce que** ladite cible est une portion de disque opaque d'angle au centre dit premier angle (γ) de 180°.

11. Dispositif de détection, comportant un module de détection selon l'une des revendications 1 a 9 et un compteur de fluide selon la revendication 10.

## Patentansprüche

1. Detektionsmodul (5), das dazu bestimmt ist, mit einem Fluidzähler zusammenzuwirken, der einen Verbrauchsindikator aufweist, der von einem drehbaren Ziel und mindestens einem Spiegel gebildet wird, wobei das Modul optische Elemente des Emitter-Typs und des Empfänger-Typs aufweist, wobei das Modul (5) mindestens zwei optische Elemente (6A, 6B) eines Typs und mindestens ein optisches Element (7) des anderen Typs enthält, **dadurch gekennzeichnet, dass** die drei optischen Elemente (6A, 6B, 7) parallel zu einem Radius eines drehbares Ziels des Fluidzählers ausgerichtet sind, und mindestens eins der optischen Elemente (7) des Empfänger-Typs dem drehbaren Ziel des Fluidzählers gegenüberliegt, wobei die zwei optischen Elemente (6A, 6B) Emitter-Elemente eines Lichtstrahls sind, dessen Lichtstrahl außerhalb des Ziels liegt,
wobei das optische Element (7) so angeordnet ist, dass es ein vom mindestens einen Spiegel reflektiertes optisches Signal empfängt, der jeden optischen Strahl auf die Bahn des Ziels reflektiert, wobei das empfangene Signal verarbeitet wird, um mindestens die Anzahl von Umdrehungen des Ziels abzuleiten.

2. Detektionsmodul nach dem vorhergehenden Anspruch, **dadurch gekennzeichnet, dass** es zwei optische Emitter-Elemente (6A, 6B) und ein optisches Empfänger-Element (7) aufweist.

3. Detektionsmodul nach Anspruch 2, **dadurch gekennzeichnet, dass** die drei optischen Elemente (6A, 6B, 7) im Wesentlichen fluchtend ausgerichtet sind, und das optische Empfänger-Element (7) sich zwischen den Emitter-Elementen (6A, 6B) befindet.

4. Detektionsmodul nach einem der vorhergehenden Ansprüche, **dadurch gekennzeichnet, dass** es zwei optische Emitter-Elemente (6A', 6B") und zwei optische Empfänger-Elemente (7', 7") aufweist, umfasst, die paarweise assoziiert sind, wobei jedes Empfänger-Element den optischen Strahl des Emitter-Elements desselben Paars empfängt.

5. Detektionsmodul nach einem der vorhergehenden Ansprüche, **dadurch gekennzeichnet, dass** die zwei optischen Emitter (6A, 6B) sequentiell betrieben werden.

6. Detektionsmodul nach einem der vorhergehenden Ansprüche, **dadurch gekennzeichnet, dass** die Positionierung der optischen Elemente (6A, 6B, 7) derart ist, dass der Einfallswinkel (B) des optischen Strahls, der von den optischen Elementen emittiert und empfangen wird, kleiner ist als 60°.

7. Detektionsmodul nach einem der vorhergehenden Ansprüche, **dadurch gekennzeichnet, dass** es mindestens eine Kollimationsvorrichtung (8) der optischen Strahlen enthält.

8. Detektionsmodul nach Anspruch 7, **dadurch gekennzeichnet, dass** die Kollimationsvorrichtung (8) Schlitze (9) zur Begrenzung der parasitären Interferenzen zwischen Lichtstrahlen aufweist.

9. Detektionsmodul nach einem der vorhergehenden Ansprüche, **dadurch gekennzeichnet, dass** es einen zusätzlichen optischen Emitter aufweist, dessen Spur auf der Scheibe (4), wenn das Modul (5) mit dem Fluidzähler (1) zusammenwirkt, auf die Symmetrieachse (A) der Scheibe zentriert ist, wobei die Scheibe (4) mit einem reflektierenden Bereich um diese Achse (A) herum versehen ist.

10. Fluidzähler (1), der dazu bestimmt ist, mit einem Detektionsmodul (5) nach Anspruch 1 zusammenzuwirken, der einen Verbrauchsindikator aufweist, der von einem drehebaren Ziel (4) und mindestens einem Spiegel (4A, 4B) gebildet wird, der vom Detektionsmodul empfangene optische Strahlen auf die Bahn des Ziels reflektiert, und **dadurch gekennzeichnet ist, dass** das Ziel Teil einer lichtundurchlässigen Scheibe mit einem Winkel in der Mitte des ersten Winkels (γ) von 180° ist.

11. Detektionsvorrichtung, die ein Detektionsmodul nach einem der Ansprüche 1 bis 9 und einen Fluidzähler nach Anspruch 10 aufweist.

## Claims

1. Detection module (5) intended to interact with a fluid meter including a consumption indicator formed of a rotatable target and at least one mirror, the module comprising optical elements of emitter type and of receiver type, the module (5) comprising at least two said optical elements (6A, 6B) of one type and at least one said optical element (7) of the other type, **characterized in that** the three optical elements (6A, 6B, 7) are aligned parallel to a radius of a rotatable target of said fluid meter, and at least one of said optical elements (7) of receiver type faces said rotatable target of said fluid meter,
said two optical elements (6A, 6B) are elements that emit a light beam, the light beam of which is outside the target, the optical element (7) is arranged so as to receive an optical signal reflected by said at least one mirror reflecting each optical beam on the path of the target, the received signal being processed in order to deduce at least the number of revolutions of said target.

2. Detection module according to the preceding claim, **characterized in that** it includes two emitter optical elements (6A, 6B) and one receiver optical element (7).

3. Detection module according to Claim 2, **characterized in that** said three optical elements (6A, 6B, 7) are substantially aligned, and the receiver optical element (7) is between the emitter elements (6A, 6B).

4. Detection module according to one of the preceding claims, **characterized in that** it includes two emitter optical elements (6A', 6B") and two receiver optical elements (7', 7") that are associated in pairs, each receiver element receiving the optical beam from the emitter element of the same pair.

5. Detection module according to one of the preceding claims, **characterized in that** the two optical emitters (6A, 6B) operate sequentially.

6. Detection module according to one of the preceding claims, **characterized in that** the position of said optical elements (6A, 6B, 7) is such that the angle of incidence (B) of the optical beam emitted and received by the optical elements is less than 60°.

7. Detection module according to one of the preceding claims, **characterized in that** it comprises at least one collimator (8) for collimating optical beams.

8. Detection module according to Claim 7, **characterized in that** said collimator (8) includes slots (9) for limiting stray interference between light beams.

9. Detection module according to one of the preceding claims, **characterized in that** it includes an additional optical emitter whose trace on the disc (4), when the module (5) interacts with said fluid meter (1), is centred on the axis of symmetry (A) of the disc, the disc (4) being provided with a reflective area about this axis (A) .

10. Fluid meter (1) intended to interact with an optical detection module (5) according to Claim 1, comprising a consumption indicator formed of a rotatable target (4) and at least one mirror (4A, 4B) reflecting optical beams received from the detection module on the path of the target, and being **characterized in that** said target is an opaque disc portion with a central angle, called first angle (γ), of 180°.

11. Detection device, comprising a detection module according to one of Claims 1 to 9 and a fluid meter according to Claim 10.
